# EUROPÄISCHE PATENTANMELDUNG

(11) **EP 1 276 216 A2**
(43) Veröffentlichungstag der Anmeldung: **15.01.2003**
(21) Anmeldenummer: 02013212.2
(22) Anmeldetag: 15.06.2002
(51) Int. Cl.: H02M 3/155

(54) **Vorrichtung zur Ansteuerung einer Leistungsendstufe**

(30) Priorität: 10.07.2001 DE 10133389
(71) Anmelder: ROBERT BOSCH GMBH, 70442 Stuttgart (DE)
(72) Erfinder: Seyfang, Bernd, 74379 Ingersheim (DE); Eisenhardt, Harald, 71277 Rutesheim (DE); Prang, Michael, 71720 Oberstenfeld (DE)

(57) **Zusammenfassung**

Es wird eine Vorrichtung zur Ansteuerung einer Leistungsendstufe vorgeschlagen, welche eine Leistungsendstufenansteuerung (16, 22) umfasst, die in Abhängigkeit von zumindest einem Steuersignal (19) ein Ansteuersignal (15) erzeugt zur Ansteuerung zumindest einer Leistungsendstufe (14), welche eine elektrische Last (10), vorzugsweise eine induktive Last (10) mit einer Freilaufdiode (12) schaltet, wobei eine Erfassungseinrichtung (34, 35, 36) vorgesehen ist, die ein Maß für eine elektrische Größe UGES erfasst, mit der die elektrische Last (10) beaufschlagt ist. Erfindungsgemäß ist eine Rückkopplungseinrichtung (24) vorgesehen, die in Abhängigkeit von dem Maß für die elektrische Größe UGES der Leistungsendstufensansteuerung (16, 22) zumindest ein Rückkopplungssignal (21) zuführt zur Beeinflussung des Ansteuersignals (15).

## Beschreibung

### Stand der Technik

Die Erfindung geht aus von einer Vorrichtung zur Ansteuerung einer Leistungsendstufe nach der Gattung des unabhängigen Anspruchs. Aus der EP-A 899 860 ist bereits eine Leistungsendstufenschaltung mit PWM-Betrieb und Dauereinschaltbetrieb bekannt. Eine vorgeschaltete Regelschaltung steuert in Abhängigkeit von einem externen vorgebbaren Sollwert, einem Istwert der Leistungsendstufe und einer von der Versorgungsspannung abgeleiteten Bezugsspannung den Pulsweitenmodulationsgenerator und die Leistungsendstufe in einen Dauerausschaltzustand, einen PWM-Betrieb mit pulsweitenmodulierten Pulsen und einen Dauereinschaltzustand. Eine erhöhte Verlustleistung und hohe EMV im Grenzbereich zur Volllast wird dadurch vermieden, dass sie in Abhängigkeit von einem vorgebbaren Sollwert und der Versorgungsspannung vorzeitig vom PWM-Betrieb in den Dauereinschaltbetrieb übergeht und mit einer Hysterese dieser Werte wieder in den PWM-Betrieb zurückkehrt.

Es ist Aufgabe der vorliegenden Erfindung, eine Leistungsendstufenansteuerung anzugeben, die die EMV-Verträglichkeit weiter erhöht und Verlustleistung reduziert. Diese Aufgabe wird durch die Merkmale des unabhängigen Anspruchs gelöst.

### Vorteile der Erfindung

Die Erfindung geht aus von einer Vorrichtung zur Ansteuerung einer Leistungsendstufe, die in Abhängigkeit von zumindest einem Steuersignal ein Ansteuersignal für zumindest eine Leistungsendstufe erzeugt, um in einem Schaltbetrieb die Leistungsendstufe anzusteuern, die eine elektrische Last mit induktivem Anteil, vorzugsweise mit einer Freilaufdiode, schaltet. Die Vorrichtung umfasst weiterhin eine Erfassungseinrichtung, die ein Maß für eine elektrische Größe erfasst, mit der die elektrische Last beaufschlagt ist. Sie zeichnet sich dadurch aus, dass eine Rückkopplungseinrichtung vorgesehen ist, die in Abhängigkeit von dem Maß für die elektrische Größe der Leistungsendstufenansteuerung zumindest ein Rückkopplungssignal zuführt zur Beeinflussung des Ansteuersignals. Dadurch können sowohl leitungsgeführte als auch abgestrahlte Störungen insbesondere bei pulsweitenmodulierten Leistungsstellern für induktive Verbraucher in Kraftfahrzeugen weiter reduziert werden, da durch die Rückkopplung eine optimierte Ansteuerung des Leistungshalbleiters ermöglicht wird. Insbesondere durch die Zeitverzögerungen beim Übergang vom leitenden Betrieb auf sperrenden Betrieb oder umgekehrt bei einer einem Elektromotor parallel geschalteten Freilaufdiode werden beim hochfrequenten, steilflankigen Ein- und Ausschalten Störungen verursacht. Diese Zeitverzögerung der Freilaufdiode beim Übergang vom leitenden Betrieb auf sperrenden Betrieb und umgekehrt lässt sich anhand eines Spannungseinbruchs oder einer Spannungserhöhung detektieren und für eine störungsoptimierte Ansteuerung der Leistungsendstufe verwenden. Zu den Zeiten des Übergangs vom leitenden in den nichtleitenden Zustand der Freilaufdiode wird gezielt die Flankensteilheit der Drainspannung der Leistungsendstufe reduziert. Dies wird durch die Rückkopplungseinrichtung erreicht, die ein Rückkopplungssignal an die Leistungsendstufenansteuerung weiterleitet, so dass sich die Schaltgeschwindigkeit der Leistungsendstufe während der Übergangszeit verlangsamt. In Zeiten, in denen der Schaltvorgang der Diode beendet ist, wird die Leistungsendstufe zur Reduzierung der Gesamtverlustleistung mit maximaler Schaltgeschwindigkeit angesteuert, d.h. mit maximaler Flankensteilheit.

In einer zweckmäßigen Weiterbildung ist vorgesehen, dass eine Rückkopplungsaktivierungseinrichtung vorgesehen ist, die die Weiterleitung des Rückkopplungssignals steuert. Die Rückkopplungsaktivierungseinrichtung leitet das Rückkopplungssignal zur Reduzierung der Flankensteilheit nur dann weiter, wenn der Schaltvorgang der Diode noch nicht beendet ist. Dadurch werden Störungen minimiert. Ist jedoch der Schaltvorgang der Diode beendet, so erkennt dies die Rückkopplungsaktivierungseinrichtung anhand des Rückgangs der Spannungserhöhung bzw. Spannungsabsenkung und deaktiviert die Weiterleitung des Rückkopplungssignals. Dadurch kann das Schaltverhalten der Leistungsendstufe gezielt beeinflusst werden, um einerseits während des Schaltvorgangs der Diode die Störungen zu minimieren, andererseits bei Beendigung des Schaltvorgangs der Diode das Schaltverhalten der Leistungsendstufe zu beschleunigen zur Verlustleistungsreduzierung.

In einer zweckmäßigen Weiterbildung leitet die Rückkopplungsaktivierungseinrichtung das Rückkopplungssignal dann weiter, wenn das Maß für die elektrische Größe einen Grenzwert über- oder unterschreitet. Denn der Beginn des Schaltvorgangs der Diode macht sich in Form einer Spannungserhöhung bzw. -erniedrigung bemerkbar, die durch Grenzwertvergleich detektiert werden kann.

In einer zweckmäßigen Weiterbildung ist vorgesehen, die elektrische Größe in einem Speicherglied, vorzugsweise einem RC-Glied, zwischenzuspeichern als Referenzwert. Übersteigt bzw. unterschreitet die elektrische Grösse den zwischengespeicherten Referenzwert, wird auf einen Spannungspeak geschlossen und die Rückkopplung aktiviert. Als Rückkopplungssignal wird der Spannungspeak verwendet, gegebenenfalls nach Signalanpassungen über Widerstände. Diese analoge Schaltungsrealisierung gewährleistet eine störungs- und verlustminimierte Ansteuerung der Leistungsendstufe.

Weitere zweckmäßige Weiterbildungen ergeben sich aus weiteren abhängigen Ansprüchen und aus der Beschreibung.

### Zeichnung

Die Erfindung wird anhand eines in den Zeichnungen dargestellten Ausführungsbeispiels näher erläutert.

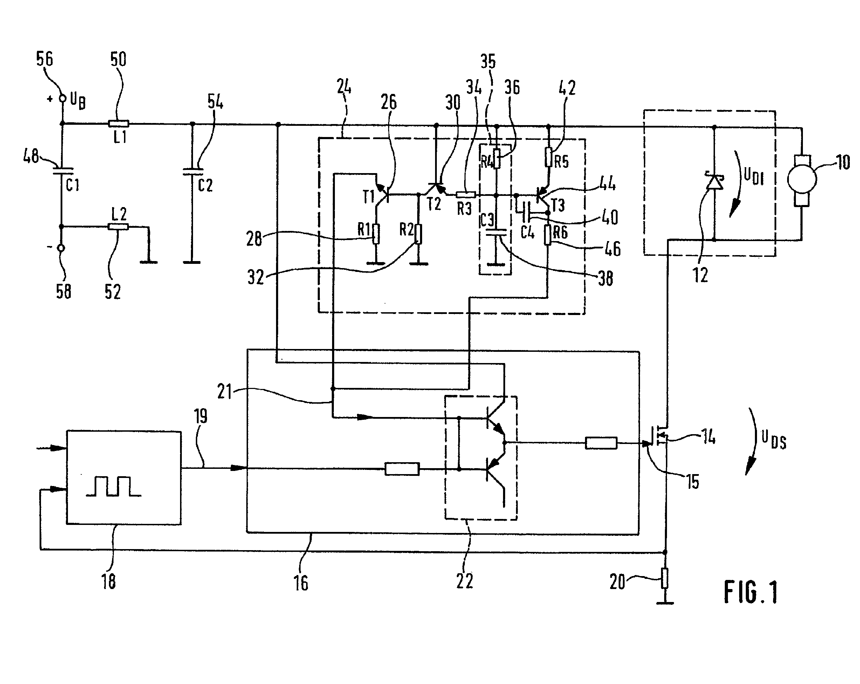

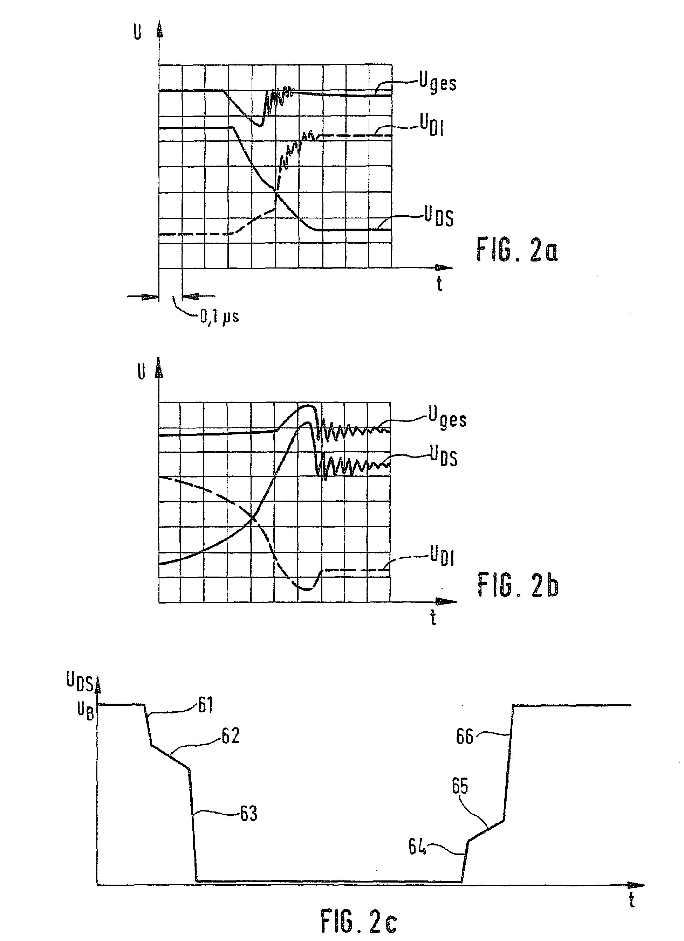

Es zeigen Figur 1 eine Schaltungsanordnung zur Ansteuerung einer Leistungsendstufe, die Figur 2a zeitabhängige Spannungsverläufe der Drainspannung der Endstufe, der Diodenspannung an der Freilaufdiode sowie die resultierende Gesamtspannung bei einem Einschaltvorgang, die Figur 2b die entsprechenden zeitabhängigen Spannungsverläufe bei Ausschaltvorgängen sowie die Figur 2c den zeitabhängigen Verlauf der Drainspannung bei erfindungsgemäßer Rückkopplung.

### Beschreibung des Ausführungsbeispiels

Als elektrische Last ist ein induktiver Verbraucher 10 vorgesehen, beispielsweise ein Elektromotor. Diesem induktiven Verbraucher 10 ist eine Freilaufdiode 12 parallel geschaltet. Der induktive Verbraucher 10 wird über eine Leistungsendstufe 14 geschaltet. Zur Erfassung des durch die Leistungsendstufe 14 fliessenden Stroms ist ein gegen Masse verschalteter Messwiderstand 20 vorgesehen, dessen Potential abgegriffen und einer PWM-Steuerung 18 zugeführt ist. Dieser PWM-Steuerung 18 ist außerdem ein Sollwert zugeführt. Aus Soll- und Istwert erzeugt die PWM-Steuerung 18 ein Steuersignal 19, welches einer Leistungsendstufenansteuerung 16 als Eingangsgröße dient. Die Leistungsendstufenansteuerung 16 umfasst eine Push-Pull-Stufe 22, bestehend aus zwei Transistoren, deren jeweilige Basis elektrisch leitend miteinander verbunden sind. Der Basis der Push-Pull-Stufe 22 sind sowohl das Steuersignal 19 über einen Vorwiderstand sowie ein Rückkopplungssignal 21 elektrisch leitend zugeführt. Die Push-Pull-Stufe 22 wird durch die positive Versorgungsspannung UB gespeist und ist andererseits mit Masse verbunden. Der Emitter des einen Transistors der Push-Pull-Stufe 22 ist über einen Vorwiderstand mit dem Gateanschluss der Leistungsendstufe 14 verbunden zur Weiterleitung eines Ansteuersignals 15. Die beiden Transistoren der Push-Pull-Stufe 22 sind als Emitterfolger verschaltet.

Die am Pluspol 56 abgreifbare Versorgungsspannung UB gelangt über eine erste Drossel 50 an die Parallelschaltung des induktiven Verbrauchers 10 und der Freilaufdiode 12. Zwischen dem Pluspol 56 und einem Minuspol 58 ist eine erste Kapazität 48 angeordnet. Das Minuspotential wird über eine zweite Drossel 52 gegen Masse geführt. Weiterhin ist eine zweite Kapazität 54 vorgesehen, die das positive Versorgungspotential des induktiven Verbrauchers 10 gegen Masse koppelt. Erste und zweite Drossel 50, 52 sowie erste und zweite Kapazität 48, 54 dienen der Entstörung.

Eine Rückkopplungseinrichtung 24 wird von dem positiven Versorgungspotential als Eingangsgröße angesteuert. Das positive Versorgungspotential ist mit der Basis eines zweiten Transistors 30 verbunden, dessen Kollektor über einen zweiten Widerstand 32 einerseits mit Masse, andererseits mit der Basis eines ersten Transistors 26 verbunden ist. Der Kollektor des ersten Transistors 26 ist über einen ersten Widerstand 28 gegen Masse geschaltet, der Emitter des ersten Transistors 26 wird mit dem Ausgangssignal eines sechsten Widerstands 46 elektrisch leitend zusammengeführt und gelangt danach als Rückkopplungssignal 21 an die Basis der Push-Pull-Stufe 22. Die Rückkopplungseinrichtung 24 umfasst ein RC-Glied 35, welches aus einem vierten Widerstand 36 und einer dritten Kapazität 38, gegen Masse geschaltet, gebildet ist und von dem positiven Versorgungspotential gespeist wird. Das gemeinsame Potential des vierten Widerstands 36 und der dritten Kapazität 38 gelangt über einen dritten Widerstand 34 an den Emitter des zweiten Transistors 30, andererseits ist das gemeinsame Potential mit der Basis eines dritten Transistors 44 sowie über eine vierte Kapazität 40 mit dem Kollektor des dritten Transistors 44 elektrisch leitend verbunden. Das positive Versorgungspotential des induktiven Verbrauchers 10 gelangt außerdem über den fünften Widerstand 42 an den Emitter des dritten Transistors 44. Der Kollektorausgang des dritten Transistors 44 wird über den sechsten Widerstand 46 mit dem Ausgangspotential des Emitters des ersten Transistors 26 elektrisch leitend verbunden, so dass das Rückkopplungssignal 21 entsteht.

Die Funktionalität und Wirkungsweise der in Figur 1 gezeigten Schaltung wird nun anhand der Figuren 2a bis 2c näher beschrieben. Die in den Figuren 2a und 2b dargestellten Signalverläufe zeigen die Drainspannung UDS, die Diodenspannung UDI sowie die daraus resultierende Gesamtspannung Uges beim Einschalten (Figur 2a) und beim Ausschalten (Figur 2b) der Leistungsendstufe 14. Betrachtet man den zeitabhängigen Spannungsverlauf der Gesamtspannung Uges, so lässt sich ein Spannungseinbruch bzw. ein Spannungspeak feststellen. Diese Spannungseinbrüche bzw. Spannungserhöhungen hängen mit dem Schaltverhalten der Freilaufdiode 12 zusammen. Die Freilaufdiode 12 muss bei den auftretenden (Um-)Schaltvorgängen erst die Sperrschichtkapazität freiräumen, um ihren Schaltzustand zu wechseln. Es kommt quasi kurzzeitig zu einem Kurzschluss, wenn die Leistungsendstufe 14 bereits durchsteuert, die Freilaufdiode 12 sich jedoch noch nicht in dem vollständigen Sperrbetrieb befindet. Die Folge ist ein Spannungseinbruch der Gesamtspannung Uges. Dieser Spannungseinbruch wirkt sich negativ auf leitungsgebundene und abgestrahlte Störungen aus. Erfindungsgemäß wird nun die detektierte Spannungsabsenkung bzw. Spannungserhöhung dazu verwendet, um das Ansteuersignal für die Leistungsendstufe 14 gezielt zu beeinflussen. Diese Beeinflussung wird aus Figur 2c ersichtlich. Während des Umschaltvorgangs der Freilaufdiode 12 wird die Leistungsendstufe 14 mit einer geringeren Steilheit angesteuert, d.h. der Schaltvorgang wird bewusst verlangsamt. Diese Verlangsamung des Schaltverhaltens der Leistungsendstufe 14 zeigt sich im zweiten Bereich 62 sowie - für das Abschalten der Leistungsendstufe 14 - im Rahmen des fünften Bereichs 65. Ist der Umschaltvorgang der Freilaufdiode 12 abgeschlossen, was anhand der Beendigung des Spannungseinbruchs bzw. der Spannungserhöhung der Gesamtspannung Uges erkannt wird, so erzeugt die Leistungsendstufenansteuerung 16 ein Ansteuersignal 15 in der Weise, dass sich die Gatespannung UDS der Leistungsendstufe 14 mit maximaler Steilheit (dritter Bereich 63) verändert, bis näherungsweise das Massepotential erreicht ist. Entsprechendes geschieht auch für die Ausschaltphase der Leistungsendstufe 14, anhand der vierten bis sechsten Bereiche 64 bis 66 gezeigt.

Der in Figur 2c dargestellte Signalverlauf lässt sich beispielsweise durch die in Figur 1 gezeigte Schaltung erreichen. Durch die Rückkopplungseinrichtung 24 werden die Spannungspeaks (Spannungseinbruch bei der Einschaltphase, Spannungserhöhung bei der Ausschaltphase), die durch das zeitverzögerte Schaltverhalten der Freilaufdiode 12 entstehen, zum Zeitpunkt ihres Entstehens auf die Leistungsendstufenansteuerung 16 in Form des Rückkopplungssignals 21 gegengekoppelt. Dadurch wird nur in den Zeiten bis zum Erreichen des vollständigen Sperrbetriebs oder Durchlassbetriebs der Freilaufdiode 12 das Schaltverhalten der Leistungsendstufe 14 verlangsamt, wodurch sich die resultierenden EMV-Störungen stark vermindern. Die Leistungsendstufenansteuerung 16 ist so ausgelegt, dass ohne Rückkopplung die maximale Schaltgeschwindigkeit der Leistungsendstufe 14 erreicht wird, was sich in den sehr steilen Flanken der ersten, dritten, vierten und sechsten Bereiche 61, 63, 64, 66 bemerkbar macht.

In dem RC-Glied 35, welches aus dem vierten Widerstand 36 und der dritten Kapazität 38 besteht, ist quasi der Normalpegel der Gesamtspannung Uges, d.h. wenn kein Spannungseinbruch bzw. keine Spannungserhöhung erfolgt, gespeichert. Nun erzeugt die PWM-Steuerung 18 ein Steuersignal 19 in der Weise, dass die Leistungsendstufe 14 eingeschaltet werden soll. Die Leistungsendstufenansteuerung 16 erzeugt ein Ansteuersignal 15, das eine Drainspannung UDS mit maximaler Schaltgeschwindigkeit (erster Bereich 61) hervorruft. Während dieser Zeitspanne ist die Rückkopplung noch nicht aktiv, es wird noch kein Rückkopplungssignal 21 durch die Rückkopplungseinrichtung erzeugt. Denn bislang überstieg die Gesamtspannung Uges noch nicht die in dem RC-Glied 35 gespeicherte Referenzspannung, so dass keiner der drei Transistoren 26, 30, 44 durchsteuert.

Anschließend tritt wegen des Umschaltens der Freilaufdiode 12 ein Spannungseinbruch der Gesamtspannung Uges beim Einschaltvorgang der Leistungsendstufe 14 auf. Unterschreitet der Spannungseinbruch der Gesamtspannung Uges um einen bestimmten Betrag den in dem RC-Glied 36 gespeicherten Referenzwert, bewirken die Spannungsverhältnisse ein Aufsteuern von erstem und zweitem Transistor 26, 30. Der Spannungseinbruch der Gesamtspannung Uges gelangt über ersten und zweiten Transistor 26, 30 als Rückkopplungssignal 21 an die Basis der Push-Pull-Stufe 22. Das ebenfalls der Basis der Push-Pull-Stufe 22 zugeführte Steuersignal 19 wird entsprechend des Spannungseinbruchs durch das Rückkopplungssignal 21 reduziert (Gegenkopplung). Dadurch verringert sich die Schaltgeschwindigkeit der Leistungsendstufe 14. Die Drainspannung UDS der Leistungsendstufe 14 fällt dadurch in dem zweiten Bereich 62 flacher ab als in den ersten und dritten Bereichen 61, 63, in welchen keine Spannungseinbrüche der Gesamtspannung Uges detektiert wurden.

In der Zwischenzeit ist die Freilaufdiode 12 vollkommen umgesteuert. Dies zeigt sich am Rückgang des Spannungseinbruchs. Die Gesamtspannung Uges erreicht nun näherungsweise wieder den im RC-Glied 35 zwischengespeicherten Wert. Erster und zweiter Transistor 26, 30 steuern nun nicht mehr durch, so dass kein Rückkopplungssignal 21 an die Basis der Push-Pull-Stufe 22 gelangt. Die Leistungsendstufenansteuerung 16 generiert nun ein Ansteuersignal 15 mit maximaler Schaltgeschwindigkeit, was sich in Form der maximalen Flankensteilheit in dem dritten Bereich 63 bemerkbar macht.

Von der PWM-Steuerung 18 gelangt nun ein Steuersignal 19 an die Leistungsendstufenansteuerung 16, das ein Abschalten der Leistungsendstufe 14 bewirken soll. In dem vierten Bereich 64 wird die Leistungsendstufe 14 zuerst mit maximaler Schaltgeschwindigkeit angesteuert. Aufgrund der Umschaltvorgänge in der Freilaufdiode 12 kommt es zu einer Spannungserhöhung der Gesamtspannung Uges gemäß Figur 2b. In dem RC-Glied 36 ist das Spannungsniveau der Gesamtspannung Uges vor der Spannungserhöhung abgespeichert. Übersteigt der Spannungspeak die in dem RC-Glied gespeicherte Referenzspannung um einen bestimmten Betrag, so wird der dritte Transistor 44 aufgesteuert. Nun gelangt der positive Spannungspeak über den dritten Transistor 44 als Rückkopplungssignal 21 an die Basis der Push-Pull-Stufe 22. Dadurch wird ein Ansteuersignal 15 in der Weise erzeugt, dass sich die Schaltgeschwindigkeit reduziert. Dies geht einher mit einer weniger großen Spannungsänderung der Drainspannung UDS in dem fünften Bereich 65. Ist der Umschaltvorgang der Freilaufdiode 12 abgeschlossen, so reduziert sich die Spannungserhöhung der Gesamtspannung Uges. Unterschreitet die Spannungserhöhung wieder einen bestimmten Grenzwert, so wird der dritte Transistor 44 nicht mehr aktiviert. Das Rückkopplungssignal 21 gelangt nicht mehr an die Basis der Push-Pull-Stufe 22. Die Leistungsendstufe 14 wird nun wieder mit maximaler Schaltgeschwindigkeit angesteuert (sechster Bereich 66).

Die beiden Drosseln 50, 52 sowie die beiden Kapazitäten 48, 54 dienen der Verbesserung des EMV-Verhaltens. Außerdem gewährleisten die beiden Drosseln 50, 52, dass es kurzfristig auch tatsächlich zu einem detektierbaren Spannungseinbruch bzw. zu einer Spannungserhöhung der Gesamtspannung Uges kommt. Dieser Spannungseinbruch bzw. diese Spannungserhöhung lässt sich dadurch leichter detektieren und - nach entsprechender Signalanpassung über die Widerstände 25, 32, 34, 42, 46 - auch entsprechend als Rückkopplungssignal 21 verwenden.

Die vorbeschriebene Schaltung gemäß Figur 1 kann sinngemäß auch dann zum Einsatz kommen, wenn die Leistungsendstufe 14 an dem Pluspol und der induktive Verbraucher 10 mit Freilaufdiode 12 am Minuspol angeschlossen ist. Die Pegel sind entsprechend anzupassen.

Bevorzugte Verwendung findet diese Schaltung insbesondere zur Ansteuerung eines Verstellantriebs in einem Kraftfahrzeug, beispielsweise zur Gebläseansteuerung bzw. Klappenverstellung. Sie ist jedoch hierauf nicht eingeschränkt.

## Patentansprüche

1. Vorrichtung zur Ansteuerung einer Leistungsendstufe, mit einer Leistungsendstufenansteuerung (16, 22), die in Abhängigkeit von zumindest einem Steuersignal (19) ein Ansteuersignal (15) für zumindest eine Leistungsendstufe (14) erzeugt, um in einem Schaltbetrieb die Leistungsendstufe (14) anzusteuern, die eine elektrische Last (10) mit induktivem Anteil, vorzugsweise mit einer Freilaufdiode (12), schaltet, mit einer Erfassungseinrichtung (34, 35, 36), die ein Maß für eine elektrische Größe (Uges) erfasst, mit der die elektrische Last (10) beaufschlagt ist, **dadurch gekennzeichnet, dass** eine Rückkopplungseinrichtung (24) vorgesehen ist, die in Abhängigkeit von dem Maß für die elektrische Größe (Uges) der Leistungsendstufenansteuerung (16, 22) zumindest ein Rückkopplungssignal (21) zuführt zur Beeinflussung des Ansteuersignals (15).

2. Vorrichtung nach Anspruch 1, **dadurch gekennzeichnet, dass** eine Rückkopplungsaktivierungseinrichtung (24) vorgesehen ist, die eine Weiterleitung des Rückkopplungssignals (19) steuert.

3. Vorrichtung nach einem der vorhergehenden Ansprüche, **dadurch gekennzeichnet, dass** die Rückkopplungsaktivierungseinrichtung (24) das Rückkopplungssignal (19) dann weiterleitet, wenn das Maß für die elektrische Größe (Uges) einen Grenzwert über- oder unterschreitet.

4. Vorrichtung nach einem der vorhergehenden Ansprüche, **dadurch gekennzeichnet, dass** als Rückführungssignal (19) das Maß für die elektrische Größe (Uges) verwendet ist.

5. Vorrichtung nach einem der vorhergehenden Ansprüche, **dadurch gekennzeichnet, dass** ein Speicherglied (34, 35, 36), vorzugsweise ein RC-Glied, vorgesehen ist, welches das Maß für die elektrische Größe (Uges) als Referenzwert erfasst zur Erkennung eines Einbruchs und/oder einer Erhöhung der elektrischen Größe (Uges) bezüglich des Referenzwerts.

6. Vorrichtung nach einem der vorhergehenden Ansprüche, **dadurch gekennzeichnet, dass** die Leistungsendstufenansteuerung (16) eine Push-Pull-Stufe (22) umfasst.

7. Vorrichtung nach einem der vorhergehenden Ansprüche, **dadurch gekennzeichnet, dass** Filtermittel (48, 50, 52, 54) vorgesehen sind, über welche die elektrische Last (10, 12) mit Energie versorgt ist.

8. Vorrichtung nach einem der vorhergehenden Ansprüche, **dadurch gekennzeichnet, dass** als Steuersignal (19) ein pulsweitenmoduliertes Signal verwendet ist zur Steuerung des Schaltbetriebs.

9. Vorrichtung nach einem der vorhergehenden Ansprüche, **dadurch gekennzeichnet, dass** die Rückkopplungseinrichtung (24) aktiviert ist, wenn eine Erhöhung oder ein Einbruch der elektrischen Größe (Uges) detektiert ist.

10. Vorrichtung nach einem der vorhergehenden Ansprüche, **dadurch gekennzeichnet, dass** die Leistungsendstufenansteuerung (16) bei aktivierter Rückkopplung die Leistungsendstufe (14) mit geringerer Schaltgeschwindigkeit ansteuert als bei nicht aktivierter Rückkopplung.
